# EUROPEAN PATENT APPLICATION

(11) **EP 1 077 423 A2**
(43) Date of publication of application: **21.02.2001**
(21) Application number: 99308704.8
(22) Date of filing: 02.11.1999
(51) Int. Cl.: G06F 17/60

(54) **Method and apparatus for collaborative information management**

(30) Priority: 17.08.1999 SG 9904112
(71) Applicant: Amoeba Interactive PTE Ltd, Singapore 088484 (SG)
(72) Inventor: Tang, Chi Sim, Singapore 118878 (SG)
(74) Representative: Isaacs, David

(57) **Abstract**

The present invention provides an apparatus for managing and displaying information stored on one or more computers, the information comprising one or more information entries each associated with one or more user groups, the apparatus including: selection means for selecting one or more of the groups; display means for displaying the information entries associated with the selected groups; wherein the selection means is operable by a user to select groups of which the user is a member, and the apparatus is configured to respond to the selection by displaying the information associated with the selected groups. The invention also provides a method of managing and displaying such information, including: selecting one or more of the groups of which a user is a member; displaying the information entries associated with the selected groups; whereby information associated with the selected groups is displayed.

## Description

### FIELD OF THE INVENTION

The present invention relates to a method and system for managing information stored on one or more computers in a collaborative or shared environment, of particular but by no means limited application in managing shared information stored on a plurality of networked computers.

### BACKGROUND OF THE INVENTION

Existing electronic Personal Information Management (PIM) utilities such as Calendars, 'To-Do' Lists and Address Books are used in the management of daily schedules and to-do tasks, among other information. With the growth of the Internet, these electronic PIMs have gradually moved onto the Internet to increase the reach and convenience of centrally managed databases, as well as the network effect of the Internet, and thereby add a collaborative or community aspect to sets of personal information.

The focus of these existing Internet-based PIMs has been on personal information management in its own right, followed by a collaborative or 'group-based' approach implemented usually by a shared account, where every member has the same log in credentials to enter into that account to make use of the common facilities. Consequently, the user may be required to log out of his or her personal account and log into a group or communal account to work there.

Existing implementations of group-based collaboration in Internet-based PIMs may allow 'overlays' of a single group's or all groups' information on a single display, and possibly allow the user to select the desired time period to be displayed. Consequently, where the user is a member of a large number of groups, the ability to conveniently view group information is severely restricted owing to the overcrowding of information on a single display. Furthermore, in such systems, the provision of both adequate security and reasonable access rights is difficult or impossible and, as a result, these are unavailable in many existing Internet-based PIM systems, which thereby affects the privacy and integrity of the shared data.

### SUMMARY OF THE INVENTION

The present invention, therefore, seeks to provide a system for managing and displaying collaborative shared information stored on one or more computers by providing means for selecting the groups whose information is to be displayed.

Accordingly, the present invention provides an apparatus for managing and displaying information stored on one or more computers, said information comprising one or more information entries each associated with one or more user groups, said apparatus including:
selection means for selecting one or more of said groups;
display means for displaying said information entries associated with said selected groups;
wherein said selection means is operable by a user to select groups of which said user is a member, and said apparatus is configured to respond to said selection by displaying said information associated with said selected groups.

Preferably said selection means comprises icon means displayable on said display means with selectable options, wherein each respective selectable option corresponds to one or more of said groups.

Preferably said icon means includes a drop down menu including a list of multiply selectable entries, wherein each of said selectable options is represented by one of said entries.

Alternatively, the selection means may comprise multiple check boxes displayable on said display means, wherein each of said check boxes corresponds to one or more of said groups and said selection means is operable by checking one or more of check boxes to perform said selecting of said one or more of said groups.

Preferably said apparatus includes means for ordering said information entries associated with said selected groups according to a preselected criterion.

Preferably, when said information is time dependent (e.g. diary or calendar information), said criterion is time.

Preferably said apparatus includes:
access control means, whereby said apparatus is operable to allocate or amend access rights for each respective user, said access rights specifying which group's or groups' information entries said respective user may access and what functions (such as viewing, adding, amending or deleting information) said respective user may perform on said information entries; and
amendment means operable to amend (including augmenting, altering or deleting) said information entries according to access specified by said access rights.

Thus, the present invention includes a group security system for managing and controlling the use of the apparatus.

Preferably said access rights include moderator access rights conferrable on a selected user to allow said selected user to amend any information entry corresponding to a selected group, whereby said selected user becomes a moderator of said selected or moderated group and said moderator may or may not be a member of said moderated group.

Preferably said moderator is not a member of said moderated group.

Preferably said apparatus includes group creation means for creating a new user group. Preferably said group creation means includes means for adding members to or removing members from one or more of said user groups, and/or information entries associated with said respective user group. Preferably said group creation means is operable to manage each user's access rights and status in each group of which said user is member.

Preferably, when said information is stored on more than one computer, said plurality of computers are connected by means of a computer network, such as the Internet.

In some embodiments said information is stored on a server computer to which other client computers are connected, and said apparatus is operable from any one of said client computers. In other embodiments, some or all of said information is stored on one or more client computers connected to a server computer. In such embodiments, however, said apparatus is preferably operable from said client computers.

The present invention also provides a method of managing and displaying information stored on one or more computers, said information comprising one or more information entries each associated with one or more user groups, said method including:
selecting one or more of said groups of which a user is a member;
displaying said information entries associated with said selected groups;
whereby information associated with said selected groups is displayed.

Preferably said method includes displaying icon means including selectable options, each respective selectable option corresponding to one or more of said groups, and performing said selecting of said one or more groups by means of said icon means.

Preferably said icon means includes a drop down menu including a list of multiply selectable entries, wherein each of said selectable options is represented by one of said entries.

Alternatively, the method may include displaying multiple check boxes, each of said check boxes corresponding to one or more of said groups, and performing said selecting of said one or more groups by checking one or more of check boxes.

Preferably said method includes displaying said information entries associated with said selected groups according to a preselected criterion.

Preferably, when said information is time dependent, said criterion is time.

Preferably said method includes:
allocating and/or amending access rights for each respective user, said access rights specifying which group's or groups' information entries said respective user may access and what functions (such as viewing, adding, amending or deleting information) said respective user may perform on said information entries; and
amending (including augmenting, altering or deleting) said information entries according to access specified by said access rights.

Preferably said access rights include moderator access rights conferrable on a selected user to allow said selected user to amend any information entry corresponding to a selected group, whereby said selected user becomes a moderator of said selected or moderated group and said moderator may or may not be a member of said moderated group.

Preferably said moderator is not a member of said moderated group.

Preferably said method includes creating new user groups.

In some embodiments said method includes selecting and displaying one or more of said information entries stored on a plurality of computers from a single computer of said plurality of computers.

The invention also includes a computer program product directly loadable into the internal memory of a computer, comprising software code portions for performing the steps of the above method when said product is run on a computer.

The invention further includes a computer program product stored on a computer readable medium and comprising computer readable program means for causing a computer to perform the steps of the above method.

The invention still further includes a computer readable medium, having a program recorded thereon, where the program is to make a computer execute the above method.

### BRIEF DESCRIPTION OF THE FIGURES

In order that the present invention maybe more clearly ascertained, preferred embodiments will now be described, by way of example, with reference to the accompanying drawings, in which:
Figure 1 is a view of a computer display of a collaborative schedule according to a preferred embodiment of the present invention, highlighting the group selection icon;
Figure 2 is a view of a computer display of the embodiment of figure 1, highlighting overlaid information from two groups;
Figure 3 is a flow chart depicting the creation of a new group and adding new members to the group, according to the embodiment of Figure 1;
Figure 4a is a flow chart depicting a method for viewing group information according to a preferred embodiment of the present invention, including the control of access to provide group security;
Figure 4b is a flow chart depicting the addition of new information according to the method of Figure 4a;
Figure 4c is a flow chart depicting the updating or deletion of group information according to the method of Figure 4a;
Figure 5 is a schematic illustration of a system for collaborative information management according to a preferred embodiment of the present invention;
Figure 6a is a view of the multiply selectable drop down menu according to a preferred embodiment of the present invention; and
Figure 6b is a view of the check boxes of the selection means of another embodiment of the present invention.

### DETAILED DESCRIPTION OF PREFERRED EMBODIMENTS

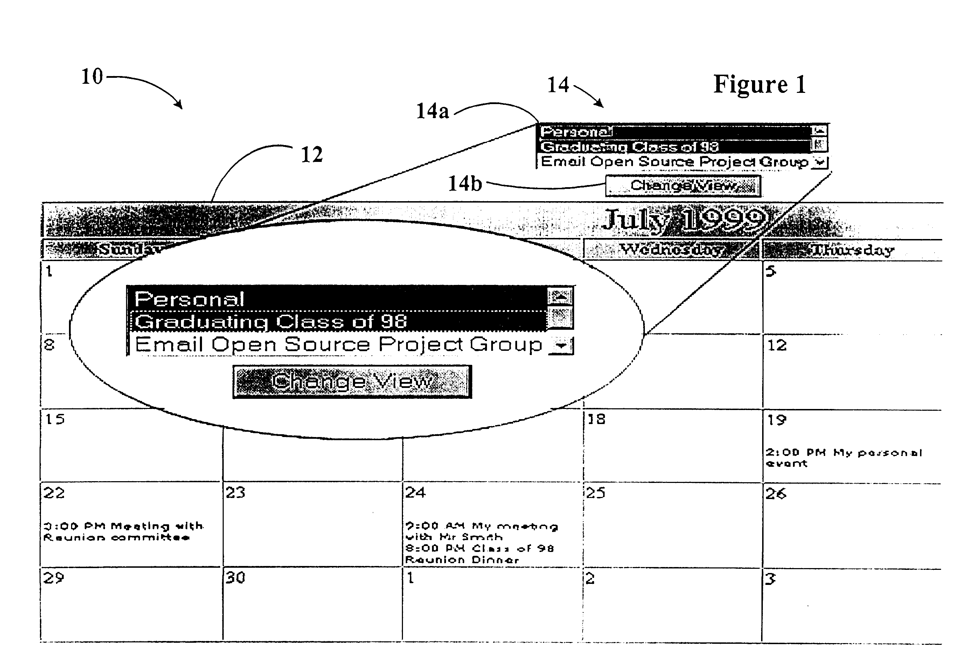

The display 10 of a collaborative information management system in the form of a collaborative schedule according to a preferred embodiment of the present invention is shown in Figure 1. Data entries, in this embodiment in the form of diary entries, each associated with one or more user groups, are stored on one or more computers. A user selects which diary entries to be displayed as (in this embodiment) a monthly diary page 12 by group.

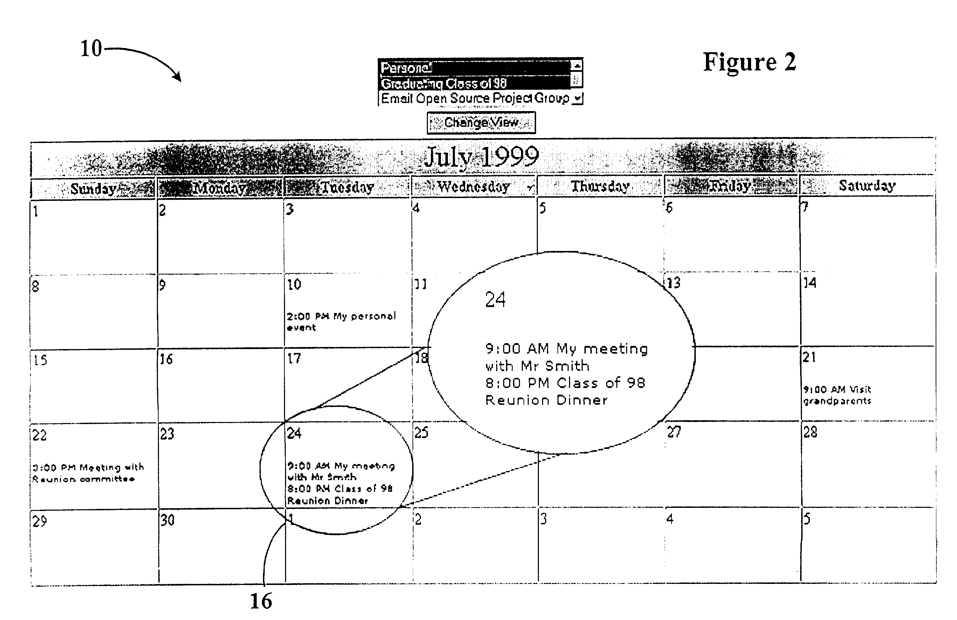

For example, the user may wish to view only "Personal" diary entries relating to him or herself (i.e. associated with the group of which he or she is the only member), as well as diary entries relating to his or her "Graduation Class" of school or university classmates, but no others. Icon 14 is provided at the top of the display 10 for selecting the groups whose data entries are to be displayed. Icon 14 includes drop down menu 14a and activation button (marked "Change View") 14b. Thus, the user selects the relevant fields from drop down menu 14a, and then activates this selection by clicking on activation or "Change View" button 14b.
The display 10 is then updated, as shown in more detail in Figure 2. In this figure the entry 16 for 24 July is highlighted, in which it will be apparent that a personal and classmate diary entry are displayed. Most usefully, these entries are presented together, in the one diary display and in chronological order within the 24 July date box.

Thus, depressing the activation button allows the immediate updating of the display according to the selected groups, without the user having to leave his or her own account or login session and thereby his or her own directory or account. As a result, the user is now able to view his own personal information as collapsed or collated with the information in the selected groups, as shown in the example of Figure 2.

As each user is assigned a specific set of access rights in the group, such as Read-only, Read and Write of own information and Global Read and Write of all information in the group (for administrator or moderator status users), the user is limited in what he or she can do to the shared information and data in the group, such as the ability to add, update or delete any information. The group is controlled by a group owner or administrator, who is a super-user with moderator access rights and the ability to add, update and delete users or change their access rights in the group.

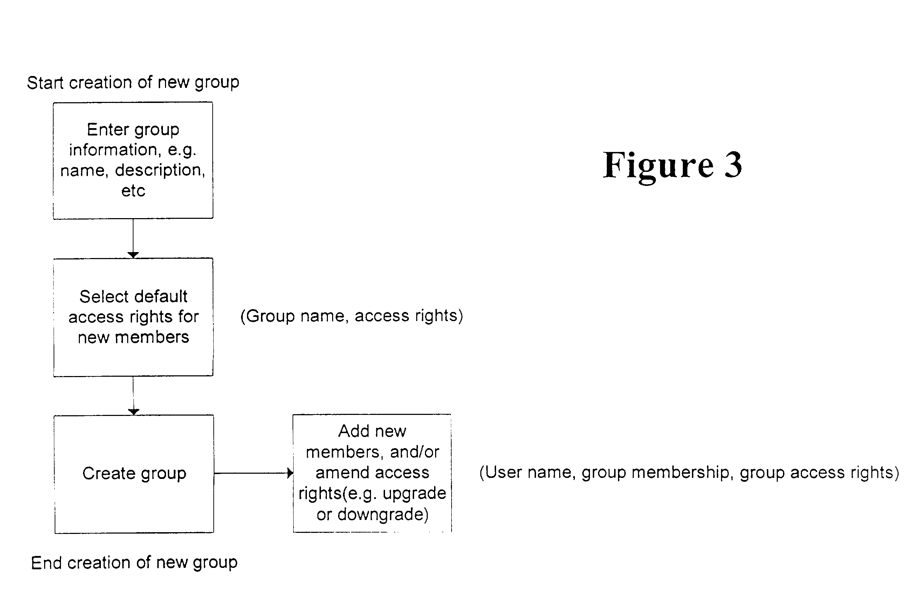

A preferred procedure for creating a group, and adding new users, to this system is depicted by means of a flow chart in Figure 3. Note that the group will be created with a set of default access rights for each user, which may be changed through a process of access rights upgrade or downgrade. The group creator or owner is the super-user, with global access rights in that group and the ability to update or delete the group and add, update or delete group users.

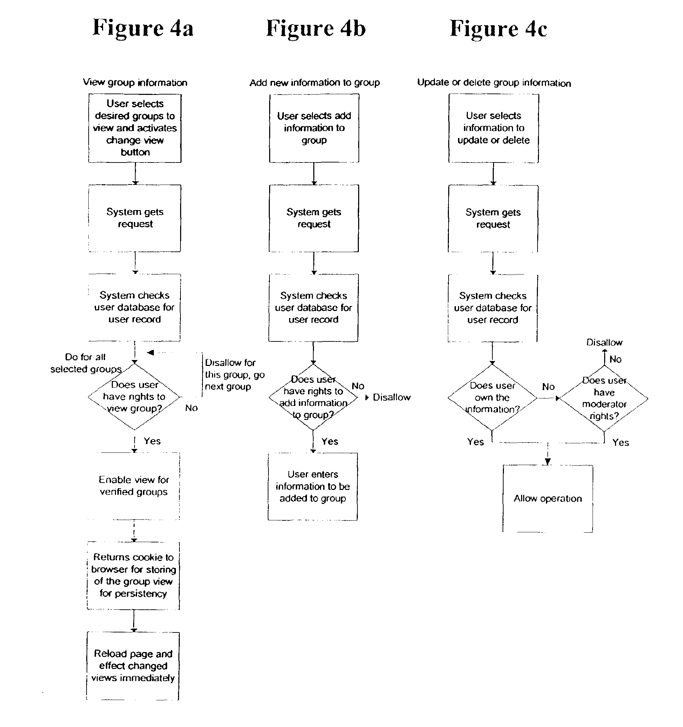

Figures 4a, 4b and 4c outline, similarly, how resources and information in such a group are protected in this system, by means of access rights.
Figure 4a refers to the access rights for changing views of group information, figure 4b for adding new information to a group, and figure 4c for updating or deleting information from a group. In each of these procedures, the requested change (i.e. to the view or the information) is only effected after the user's access rights are checked and found to permit the requested action.

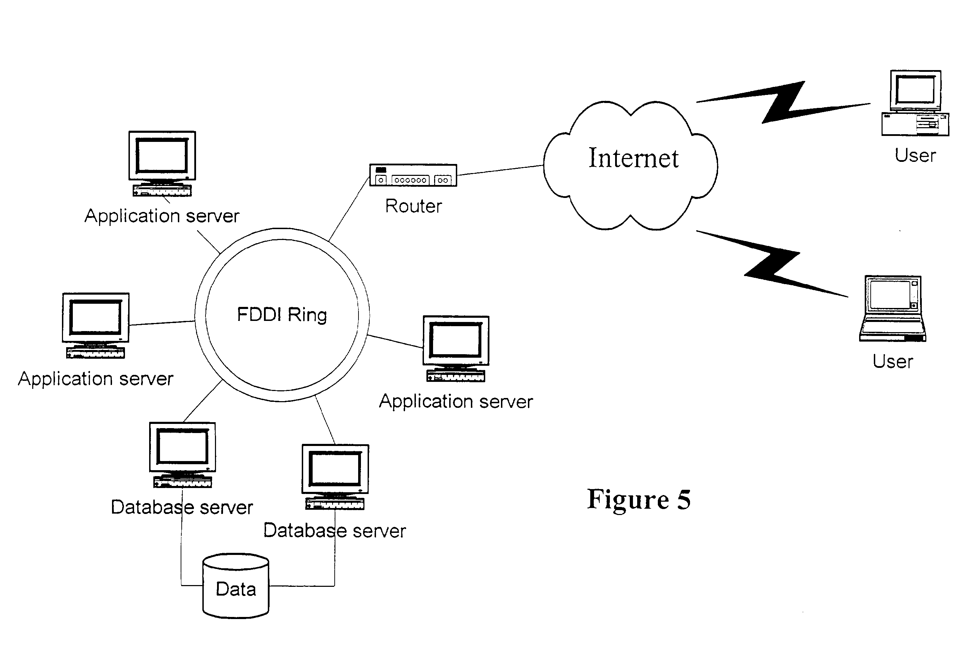

Figure 5 illustrates a collaborative information management system according to another preferred embodiment of the present invention, in which the information is stored on a number of "database servers", and several "application servers" running software encoding the method of the present invention. Users may access the information, alter displays etc according to the invention over the Internet.

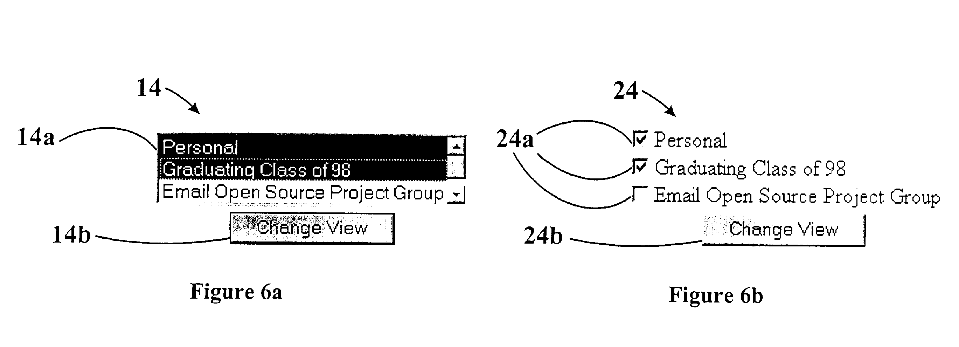

Interface features of existing browsers, other than the drop down menu 14a of icon 14 in figure 1 (shown also in figure 6a), may be used to effect the selection of groups in collaborative information management systems according to the present invention (Internet-based or otherwise), such as multiple check boxes 24a of alternative selection icon 24 shown in figure 6b. While the multiple-select drop down menu 14a makes use of the mouse pointer in conjunction with the "Ctrl" key on the keyboard to click to select or deselect the entries, the check box alternative 24 uses the mouse pointer to click to select or deselect the check boxes 24a, and activation button 24b to activate the selection. The drop down menu 14a will generally be preferred, however, especially when the number of groups to which the user belongs is large, so that the selection icon 14 does not take up an excessive amount of screen space. The drop down menu 14a of figure 6a allows multiple groups to be selected, and yet is able to scroll to accommodate a large number of entries, thus saving screen space.
Accompanied by activation button 14b which posts to a form when the desired items are selected, the change in view is immediately effected by the contents of the form, which is preferably a script that makes use of cookies to change the state of the group view.

Thus, the present invention provides a flexible system in which any number of groups may be chosen to be viewed, and in which the system presents the same user interface across all system functions. Changing the display may be effected immediately when a user selects the "Change View" button on the interface. Integrated with an access rights system, the user will be associated with the access rights attributed to him or her when joining the group or community, and therefore his or her rights will be limited in the group or groups he or she visits in accordance with these rights, to provide the privacy and integrity of the shared information or data and thereby a secure collaborative system.

Modifications may be made to the invention as will be apparent to a person skilled in the art. These and other modifications may be made without parting from the ambit of the current invention, the nature which may be ascertained from the foregoing description and the drawing.

## Claims

1. An apparatus for managing and displaying information stored on one or more computers, said information comprising one or more information entries each associated with one or more user groups, said apparatus including:
selection means for selecting one or more of said groups;
display means for displaying said information entries associated with said selected groups;
wherein said selection means is operable by a user to select groups of which said user is a member, and said apparatus is configured to respond to said selection by displaying said information associated with said selected groups.

2. An apparatus as claimed in claim 1, wherein said selection means comprises icon means displayable on said display means with selectable options, wherein each respective selectable option corresponds to one or more of said groups.

3. An apparatus as claimed in claim 2, wherein said icon means includes a drop down menu including a list of multiply selectable entries, wherein each of said selectable options is represented by one of said entries.

4. An apparatus as claimed in either claim 1 or 2, wherein said selection means comprises multiple check boxes displayable on said display means, wherein each of said check boxes corresponds to one or more of said groups and said selection means is operable by checking one or more of check boxes to perform said selecting of said one or more of said groups.

5. An apparatus as claimed in any one of the preceding claims, wherein said apparatus includes means for ordering said information entries associated with said selected groups according to a preselected criterion.

6. An apparatus as claimed in any one of the preceding claims, wherein, when said information is time dependent, said criterion is time.

7. An apparatus as claimed in any one of the preceding claims, wherein said apparatus includes:
access control means, whereby said apparatus is operable to allocate or amend access rights for each respective user, said access rights specifying which group's or groups' information entries said respective user may access and what functions said respective user may perform on said information entries; and
amendment means operable to amend said information entries according to access specified by said access rights.

8. An apparatus as claimed in claim 7, wherein said access rights include moderator access rights conferrable on a selected user to allow said selected user to amend any information entry corresponding to a selected group, whereby said selected user becomes a moderator of said selected or moderated group.

9. An apparatus as claimed in claim 8, wherein said moderator is not a member of said moderated group.

10. An apparatus as claimed in any one of the preceding claims, wherein said apparatus includes group creation means for creating a new user group.

11. An apparatus as claimed in claim 10, wherein said group creation means includes means for adding members to or removing members from one or more of said user groups, and/or information entries associated with said respective user group.

12. An apparatus as claimed in either claim 10 or 11, wherein said group creation means is operable to manage each user's access rights and status in each group of which said user is member.

13. An apparatus as claimed in any one of the preceding claims, wherein, when said information is stored on more than one computer, said plurality of computers are connected by means of a computer network.

14. An apparatus as claimed in any one of the preceding claims, wherein said information is stored on a server computer to which other client computers are connected, and said apparatus is operable from any one of said client computers.

15. An apparatus as claimed in any one of claims 1 to 13, wherein some or all of said information is stored on one or more client computers connected to a server computer.

16. An apparatus as claimed in claim 15, wherein said apparatus is operable from said client computers.

17. A method of managing and displaying information stored on one or more computers, said information comprising one or more information entries each associated with one or more user groups, said method including:
selecting one or more of said groups of which a user is a member;
displaying said information entries associated with said selected groups;
whereby information associated with said selected groups is displayed.

18. A method as claimed in claim 17, including displaying icon means including selectable options, each respective selectable option corresponding to one or more of said groups, and performing said selecting of said one or more groups by means of said icon means.

19. A method as claimed in claim 17, wherein said icon means includes a drop down menu including a list of multiply selectable entries, wherein each of said selectable options is represented by one of said entries.

20. A method as claimed in either claim 17 or 18, including displaying multiple check boxes, each of said check boxes corresponding to one or more of said groups, and performing said selecting of said one or more groups by checking one or more of check boxes.

21. A method as claimed in any one of claims 17 to 20, including displaying said information entries associated with said selected groups according to a preselected criterion.

22. A method as claimed in claim 21, wherein, when said information is time dependent, said criterion is time.

23. A method as claimed in any one of claims 17 to 22, including:
allocating and/or amending access rights for each respective user, said access rights specifying which group's or groups' information entries said respective user may access and what functions said respective user may perform on said information entries; and
amending said information entries according to access specified by said access rights.

24. A method as claimed in claim 23, wherein said access rights include moderator access rights conferrable on a selected user to allow said selected user to amend any information entry corresponding to a selected group, whereby said selected user becomes a moderator of said selected or moderated group.

25. A method as claimed in claimed 24, wherein said moderator is not a member of said moderated group.

26. A method as claimed in any one of claims 17 to 25, including creating new user groups.

27. A method as claimed in any one of claims 17 to 26, including selecting and displaying one or more of said information entries stored on a plurality of computers from a single computer of said plurality of computers.

28. A computer program product directly loadable into the internal memory of a computer, comprising software code portions for performing the steps of the method of any one of claims 17 to 27 when said product is run on a computer.

29. A computer program product stored on a computer readable medium, computer readable program means for causing a computer to perform the steps of the method of any one of claims 17 to 27.

30. A computer readable medium, having a program recorded thereon, where the program is to make computer execute a method as defined in any one of claims 17 to 27.
